# EUROPEAN PATENT SPECIFICATION

(11) **EP 3 123 083 B1**
(45) Date of publication and mention of the grant of the patent: **02.12.2020**
(21) Application number: 15768502.5
(22) Date of filing: 23.03.2015
(51) Int. Cl.: F28D 20/00, F28D 21/00, F28D 1/04, F25B 39/04, F28D 20/02, F28D 1/047, F28F 1/14, F28F 1/24, F28F 1/36

(54) **REFRIGERATION SYSTEM WITH PHASE CHANGE MATERIAL HEAT EXCHANGER**
KÜHLSYSTEM MIT SPEICHERSTOFFWÄRMETAUSCHER
SYSTÈME DE RÉFRIGÉRATION AVEC ÉCHANGEUR DE CHALEUR À MATÉRIAU À CHANGEMENT DE PHASE

(30) Priority: 24.03.2014 US 201461969289 P
(43) Date of publication of application: 01.02.2017
(73) Proprietor: The Coca-Cola Company, Atlanta, GA 30313 (US)
(72) Inventor: GODBOLE, Vinayak S., Peachtree City, Georgia 30269 (US); PEREIRA, Roberto Horn, Suwanee, Georgia 30024 (US)
(74) Representative: Dehns
(86) International application number: PCT/US2015/021940
(87) International publication number: WO 2015/148346

(56) References cited:
- EP-A1- 2 500 567
- EP-A2- 1 722 182
- EP-A2- 2 381 193
- WO-A1-2013/165535
- DE-U1-202012 103 717
- US-A- 5 231 847
- US-A1- 2010 218 917
- US-A1- 2011 259 041
- US-A1- 2013 160 484
- US-B1- 7 633 980

## Description

### TECHNICAL FIELD

The present application and the resultant patent relate generally to refrigeration systems and more particularly relate to refrigeration systems using a phase change material heat exchanger as a condenser or as other types of heat dissipating elements. A phase change material heat exchanger according to the preamble is shown by document EP1722182A.

### BACKGROUND OF THE INVENTION

Modern refrigeration systems provide cooling, ventilation, and humidity control for all or part of an enclosure. Such enclosures may include a refrigerator, a cooler, a vendor, a dispenser, and other types of light commercial or household appliances and the like. Generally described, a standard refrigeration cycle includes four basic stages to provide cooling. First, a refrigerant is compressed within a compressor to high pressure and high temperature. Second, the refrigerant is cooled within a condenser by heat exchange with ambient air drawn or blown across the condenser by a fan and the like. Third, the refrigerant passes through an expansion device that reduces both the pressure and the temperature. The refrigerant is then pumped within the enclosure to an evaporator. The refrigerant absorbs heat by blowing or drawing air across the evaporator. Finally, the refrigerant is returned to the compressor and the cycle repeats. Variations in the refrigeration cycle may depend upon the nature of the refrigerant.

The condenser commonly is in the form of a fin and tube heat exchanger so as to transfer heat to the ambient air by convection. Dust and debris, however, may clog the closely spaced fins so as to reduce the effective heat transfer. Reducing the heat transfer may increase the compressor discharge temperature so as to lower the overall efficiency and capacity. The rate of cooling capacity thus may be limited by the availability of the condenser to discharge heat consistently. The stability of the lubricating oil also may be reduced with increased refrigerant temperatures. The conventional fans generally used with a condenser also consume energy and generate noise as well as require periodic maintenance. Moreover, most air cooled condensers discharge heat only when the compressor is running and may be idle during the compressor off time.

There is thus a desire for an improved refrigeration system for use with commercial or household appliances and the like. Such an improved refrigeration system may provide a condenser and other types of heat exchangers and heat dissipating elements with improved cooling capacity and efficiency with reduced overall costs, noise, and maintenance.

### SUMMARY OF THE INVENTION

The present application and the resultant patent provide a phase change material heat exchanger according to claim 1.

The present application and the resultant patent also provide a refrigeration system. The refrigeration system may include a compressor; and a condenser downstream of the compressor; wherein the condenser comprises the phase change material heat exchanger, the heat source is refrigerant in a refrigerant tube, the outer jacket surrounds the refrigerant tube, and the phase change material is positioned between the refrigerant tube and the outer jacket and in contact with the refrigerant tube.

The present application and the resultant patent further provide a method of condensing a refrigerant. The method includes the steps according to claim 12.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a known refrigeration system.
Fig. 2 is a schematic diagram of a refrigeration system as may be described herein with a phase change material heat exchanger in the form of a phase change material condenser.
Fig. 3 is a side cross-sectional view of the phase change material heat exchanger of Fig. 2.
Fig. 4 is a further side cross-sectional view of the phase change material heat exchanger of Fig. 2.
Fig. 5 is an operational diagram showing the stages of the phase change material heat exchanger of Fig. 2 in operation.
Fig. 6 is a side sectional view of an alternative embodiment of a phase change material heat exchanger as may be described herein.
Fig. 7 is a side sectional view of a further alternative embodiment of a phase change material heat exchanger as may be described herein.
Fig. 8 is a pressure verses enthalpy chart for a typical carbon dioxide refrigeration cycle.
Fig. 9 is a schematic diagram of a compressor with a phase change material heat exchanger as may be described herein.
Fig. 10 is a schematic diagram of a further compressor with a phase change material heat exchanger as may be described herein.
Fig. 11 is a perspective view of an alternative embodiment of a phase change material heat exchanger as may be described herein in the form of a phase change material condenser.
Fig. 12 is a side view of the condenser coil of the phase change material heat exchanger of Fig. 11.
Fig. 13 is a perspective view of a portion of the phase change material heat exchanger of Fig. 11.
Fig. 14 is a perspective view of a portion of an alternative embodiment of a phase change material heat exchanger as may be described herein in the form of a phase change material condenser.
Fig. 15 is a perspective view of an alternative embodiment of a phase change material heat exchanger as may be described herein in the form of a phase change material condenser.
Fig. 16 is a perspective view of a star fin refrigerant tube for use in the phase change material condenser of Fig. 15.
Fig. 17 is a side view of the star fin refrigerant tube of the phase change material heat exchanger of Fig. 15.
Fig. 18 is a perspective view of a portion of an alternative embodiment of a phase change material heat exchanger as may be described herein in the form of a phase change material condenser.
Fig. 19 is a perspective view of a portion of an alternative embodiment of a phase change material heat exchanger as may be described herein in the form of a phase change material condenser.
Fig. 20 is a schematic view of the phase change material condenser of Fig. 19.

### DETAILED DESCRIPTION

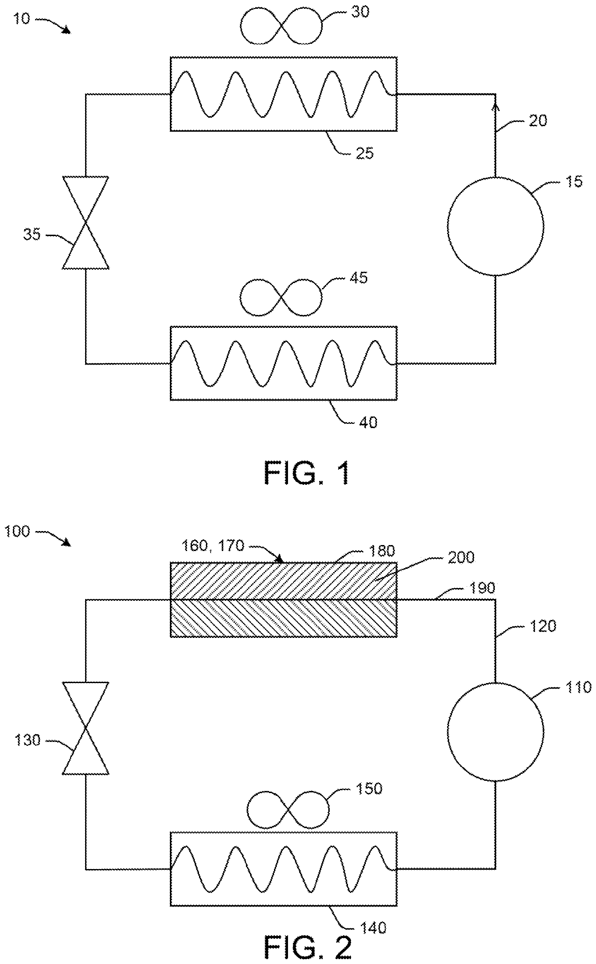

Referring now to the drawings, in which like numerals refer to like elements throughout the several views, Fig. 1 shows an example of a refrigeration system 10. The refrigeration system 10 may be used to cool any type of enclosure such as a refrigerator, a cooler, a vender, a dispenser, and the like. The overall refrigeration system 10 may have any suitable size or capacity. The refrigeration system 10 also may be applicable to air conditioning and/or heating systems. Although primarily directed towards light commercial and/or household appliances, the refrigeration system 10 also may have other types of commercial, industrial, and/or residential applications and the like.

The refrigeration system 10 may include a compressor 15. The compressor 15 may have any suitable size or capacity. The compressor 15 may be of conventional design. The compressor 15 may compress a flow of a refrigerant 20 at a high pressure and a high temperature. The refrigerant 20 may include hydrofluorocarbons, hydrocarbons, carbon dioxide, and the like. Any suitable refrigerant 20 may be used herein.

The refrigeration system 10 may include a condenser 25 positioned downstream of the compressor 15. The condenser 25 cools the flow of the refrigerant 20 via heat exchange with the surrounding environment. The condenser 25 may be a gas cooler or any type of heat exchanger with any suitable size or capacity. The condenser 25 may include a number of fins, coils, or other types of heat exchange surfaces. A condenser fan 30 may be positioned adjacent thereto. The condenser fan 30 may be a single speed fan, a variable speed fan, and the like.

The refrigeration system 10 may include an expansion device 35 positioned downstream of the condenser 25. The expansion device 35 may be of conventional design. The expansion device 35 may reduce the pressure and temperature of the flow of the refrigerant 20. The expansion device may have any suitable size or capacity.

The refrigeration system 10 also may include an evaporator 40 or other type of heat exchanger positioned downstream of the expansion device 35. The evaporator 40 may have any suitable size or capacity. The evaporator 40 may include a number of fins, coils, or other types of heat exchange surfaces. An evaporator fan 45 may be positioned adjacent thereto. The evaporator fan 45 may be a single speed fan, a variable speed fan, and the like. The flow of the refrigerant 20 may be pumped to the evaporator 40. The flow of the refrigerant 20 may absorb heat with a flow of air blown or drawn across the evaporator 40 by the evaporator fan 45 so as to cool an enclosure and the like. The evaporator 40 and the evaporator fan 45 may be of conventional design. The flow of the refrigerant 20 then may be returned to the compressor 15 so as to repeat the cycle. Other components and other configurations may be used herein.

The overall refrigeration system 10 and the components thereof described herein are for the purpose of example only. Many other types and configurations of refrigeration systems, refrigeration components, and refrigerants may be known and may be used herein.

Fig. 2 shows an example of a refrigeration system 100 as may be described herein. The refrigeration system 100 may include a compressor 110, a flow of a refrigerant 120, an expansion device 130, an evaporator 140, and an evaporator fan 150 similar to those described above. Other types of refrigeration components also may be used herein in any suitable size or capacity. The refrigeration system 100 may be used to cool an enclosure of any suitable size, shape, or configuration.

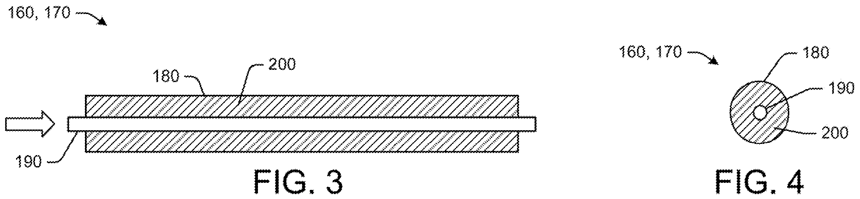

The refrigeration system 100 also may include a phase change material heat exchanger 160. In this example, the phase change material heat exchanger 160 may be in the form of a phase change material condenser 170. As is shown in, for example, Figs. 3 and 4, the phase change material condenser 170 may include an outer jacket 180. The outer jacket 180 surrounds a refrigerant tube 190 with the refrigerant 120 therein in whole or in part. The refrigerant tube 190 may be in communication with the compressor 110 and the expansion device 130. The outer jacket 180 may have a larger surface area than the refrigerant tube 190. The outer jacket 180 may be made out of any suitable type of substantially rigid material such as various types of thin metals with good heat exchange properties. The outer jacket 180 may have any suitable size, shape, or configuration.

The outer jacket 180 may include a phase change material 200 positioned therein. As is shown, the phase change material 200 surrounds the refrigerant tube 190 and is in contact for heat exchange therewith. The phase change material 200 may be any type of two phase (solid/liquid) material. The phase change material 200 may include different kinds and blends of waxes and the like. Waxes include any material that may be malleable at temperatures close to ambient or those that melt between about thirty-five to one hundred degrees Celsius. The material may be natural and/or petroleum derived. Suitable examples may include paraffin wax, lauric acid, sodium silicate, coconut oil, water, water and alcohol, water and salts, and the like. Other types of phase change materials 200 may be used herein. The phase change material 200 may have a melting point about or above typical ambient temperatures but below the temperature of the typical refrigerant 120 leaving the compressor 110. The melting temperature of the phase change material 200 may vary with the operational parameters of the compressor 110 and the refrigeration system 100 as a whole. Phase change materials 200 with differing melting and solidification temperatures may be used herein.

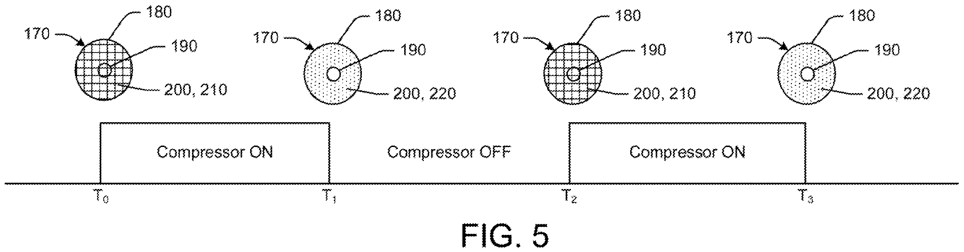

Fig. 5 shows an example of the use of the phase change material condenser 170. At time T₀, the phase change material 200 may be in a solid state 210 as the compressor 110 is turned on. The heat of the refrigerant 120 passing through the refrigerant tube 190 thus begins to melt the phase change material 200 in a transition phase. The latent heat of fusion of the phase change material 200 may provide for heat exchange at a constant temperature, *e.g*., about the melting point of the phase change material 200. The phase change material 200 thus may be in a largely liquid state 220 when the compressor is turned off at time T₁. The phase change materials 200 then again begins to solidify in a further transition phase and may be largely back to the solid state 210 by the time the compressor 110 is again turned on at time T₃ and the cycle repeats. The phase change material 200 thus absorbs heat while the compressor 110 is running and releases it to the ambient when the compressor 110 is off. Moreover, the phase change material 200 continues to provide cooling even after the time that the compressor 110 is turned off. Given the efficiency of the phase change material condenser 170, it is anticipated that a fan or other type of air movement device may not be required and/or such use may be reduced. For example, a condenser fan only may be used in an initial pull down condition and/or a restock condition of a commercial refrigerator, but not used in a steady state condition.

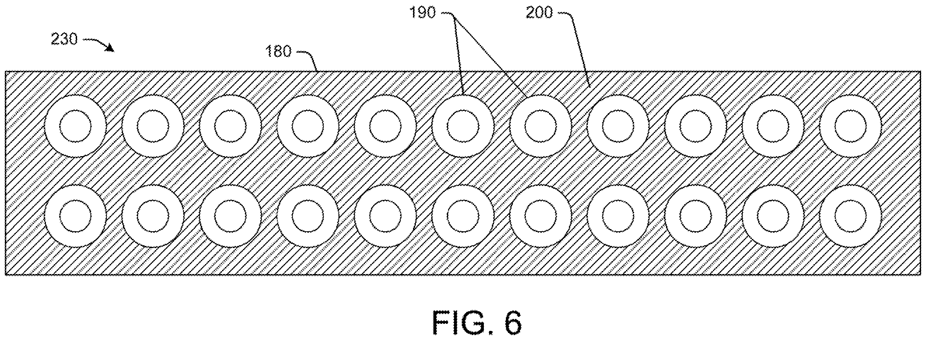

Fig. 6 shows an alternative embodiment of a phase change material heat exchanger 230 as may be described herein. In this example, a number of the refrigerant tubes 190 may be positioned within the outer jacket 180. Any number of the refrigerant tubes 190 may be positioned within an appropriately sized outer jacket 180. The outer jacket 180 may have any suitable size, shape, or configuration. Other components and other configurations may be used herein.

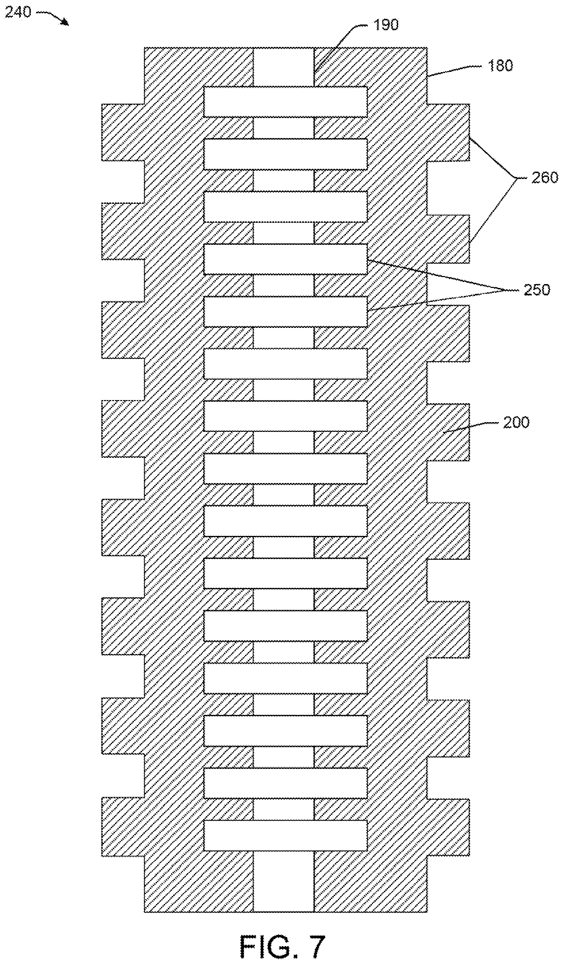

Fig. 7 shows a further example of a phase change material heat exchanger 240. In this example, the refrigerant tube 190 may have a number of refrigerant tube fins 250 positioned thereon. Any number of the refrigerant tube fins 250 may be used herein in any suitable size, shape, or configuration. The refrigerant tube 190 and the refrigerant tube fins 250 also may be positioned within the outer jacket 180. In this example, the outer jacket 180 may have a number of outer jacket fins 260 as well. Any number of the outer jacket fins 260 may be used in any suitable size, shape, or configuration. The outer jacket fins 260 may further assist in heat dissipation to the ambient. Other components and other configurations may be used herein.

The use of the phase change material 200 thus provides an overall more efficient condenser 170 and refrigeration system 100. The rate of heat rejection to the phase change material 200 may be much faster as compared to air due to the solid-liquid contact. Specifically, lowering the temperature and pressure of the refrigerant 120 as the refrigerant 120 leaves the condenser 170 may provide an increase in overall efficiency and COP (*i*.*e*., Coefficient of Performance in terms of useful heat movement per work input). Moreover, typical condensers only reject heat when the compressor is running such that the overall temperature drop in a given amount of time may be limited. With the use of the phase change material 200, this limitation is eliminated or reduced because the phase change material continuously rejects heat at a lower rate (Watts) whether the compressor is running or not. In other words, typical condensers require a higher rate of heat rejection as compared to a phase change material heat exchanger that may continuously rejects heat at a lower rate of rejection. Such an increase in efficiency may provide gains of about twenty-five percent (25%) or more.

The increased efficiency also may permit the use of smaller or otherwise more energy efficient refrigeration components such as the compressor and/or a reduced compressor on time for an increase in energy savings. Overall faster cooling and pull down also may be provided. Eliminating or reducing the use of a fan also avoids the additional energy use, procurement costs, and noise typically associated therewith. Overall maintenance costs also may be reduced as the outer jacket 180 may be a clog free surface and, because no moving parts are involved, the solution is noise free and maintenance free.

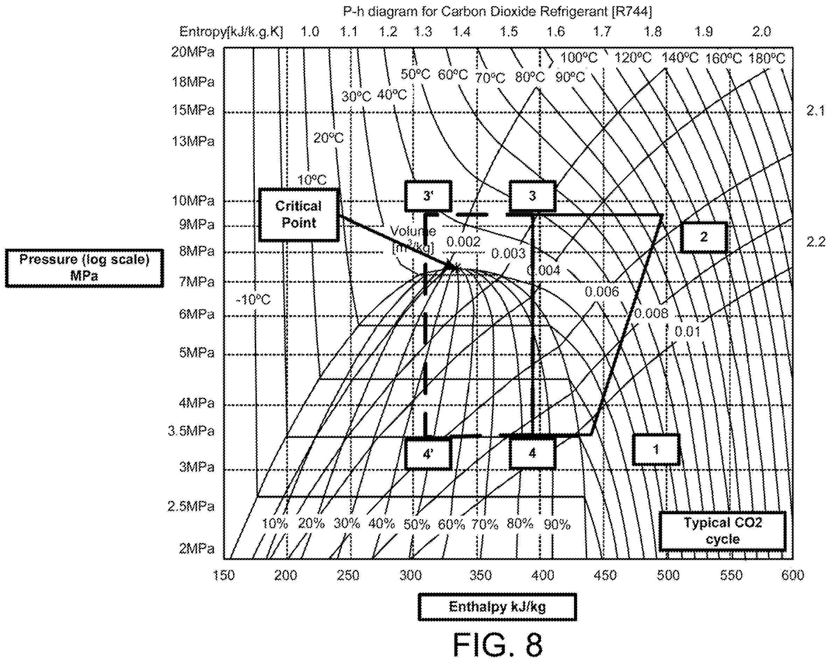

Even greater improvements in efficiency may be possible with the use of carbon dioxide as the refrigerant 120. A typical carbon dioxide cycle is shown in Fig. 8. Unique to carbon dioxide, a small drop in temperature means significant improvements in post expansion liquid fraction or latent heat in the region above the critical point. In most cases the operating temperatures are just above the critical point. As is shown, cooling the high pressure gas by just a few degrees increases COP significantly in the region above the critical point, wherein: *Heat pumped (1-4)'*/*work input (2-1) » Heat pumped (1-4)*/*work input (2-1).* The use of the phase change material 200 in the condenser 170 thus exploits this characteristic of carbon dioxide as a refrigerant so as to improve overall efficiency.

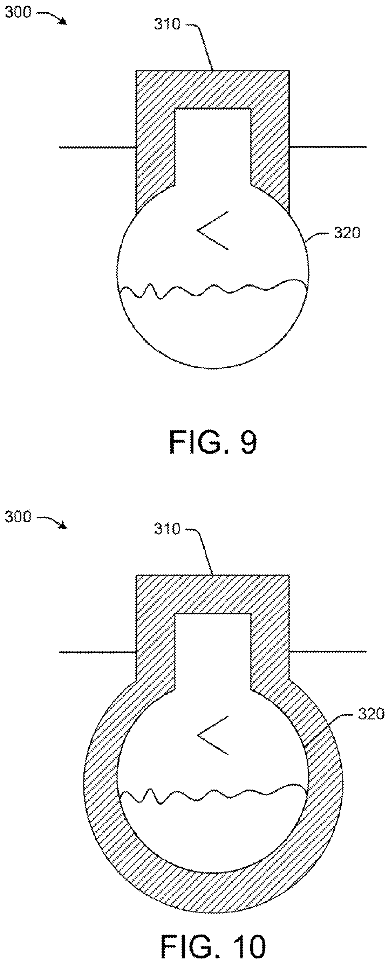

Figs. 9 and 10 show a further example of a phase change material heat exchanger 300 as may be described herein. In this example, the phase change material heat exchanger 300 may be a phase change material compressor shell 310. Specifically, the phase change material compressor shell 310 may be positioned about a compressor 320 or other type of refrigeration component. The phase change material compressor shell 310 may surround the compressor 320 in part as is shown in Fig. 9 or in full as in Fig. 10. The phase change material compressor shell 310 may have any suitable size, shape, or configuration. The phase change material 200 may be positioned between the phase change material compressor shell 310 and the compressor 320 and in contact therewith. Other components and other configurations may be used herein.

The phase change material 200 of the phase change material compressor shell 310 thus absorbs heat when the compressor 320 is running and will release the heat to the ambient when the compressor 320 is off. The refrigerant 120 thus may be cooler and with a higher density so as to improve overall system efficiency as the refrigerant 120 leaves the compressor 320. The use of the phase change material compressor shell 310 also may avoid the use of a compressor fan and the associated costs and noise. Moreover, the use of the phase change material 200 may be more efficient than the use of the fan in and of itself.

Other types of phase change material heat exchangers also may be used to provide cooling to other types of refrigeration components and the like. The use of the phase change material 200 improves overall energy efficiency with fewer parts, reduced cost, and less noise in an overall environmental friendly manner.

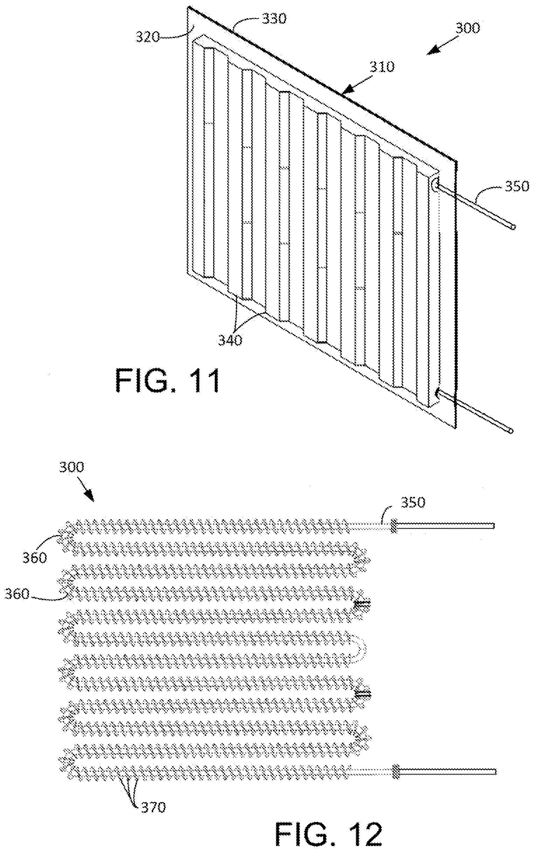

Figs. 11-13 show a further embodiment of a phase change material heat exchanger 300. The phase change material heat exchanger 300 may be used as a phase change material condenser and the like. The phase change material heat exchanger 300 may include an outer jacket 310. The outer jacket 310 may include a first half 320 and a second half 330. As is shown in Fig. 11, the halves 320, 330 may have a corrugated pattern 340 thereon with a repeating series of raised and lowered portions for an increase in surface area and hence an increase in heat transfer between the phase change material 200 and the ambient air. Other types of surface patterns may be used herein. The outer jacket 310 and the halves 320, 330 thereof may have any suitable size, shape, or configuration. The halves 320, 330 may be welded or otherwise joined together. The outer jacket 310 may be formed in a roll stamping or an extrusion process or other types of manufacturing processes. Other components and other configurations may be used herein.

The phase change material heat exchanger 300 also may include one or more refrigerant tubes 350 extending therethrough. In this example, a single refrigerant tube 350 may be used. The refrigerant tube 350 may have any suitable size, shape, or configuration. As is shown in Fig. 12, the refrigerant tube 350 may have a number of bends 360 therein. The number and the nature of the bends 360 may vary. The refrigerant tube 350 may have a number of fins 370 positioned thereon. In this example, the fins 370 may be a continuous fin that corkscrews around the refrigerant tube 350. Other types of fin designs may be used herein. For example, a number of discontinuous or continuous fins may be used. Likewise, horizontally or vertically running fins also may be used herein. Any number of the fins 370 may be used herein in any suitable size, shape, or configuration. Combinations of different type of fins 370 also may be used herein. The fins 370 provide an increase in surface area and hence an increase in heat transfer between the refrigerant 120, the refrigerant tube 350, and the phase change material 200. Other components and other configuration may be used herein.

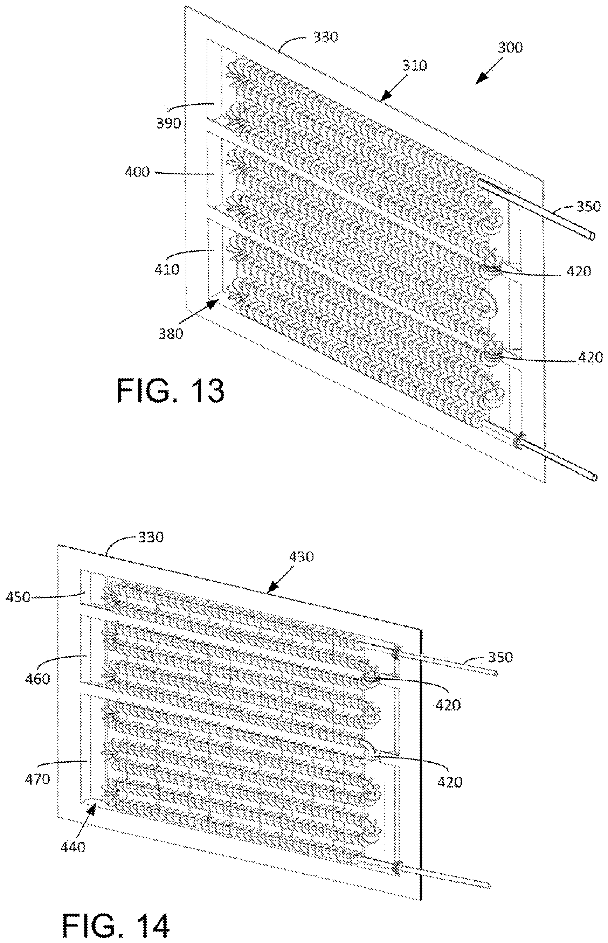

Fig. 13 shows the refrigerant tube 350 positioned within one of the halves 320, 330 of the outer jacket 310. In this example, the outer jacket 310 may be divided into a number of uniform compartments 380. Specifically, a first compartment 390, a second compartment 400, and a third compartment 410. Any number of compartments 380 may be used herein in any suitable size, shape, or configuration. A washer 420 or a similar type of barrier may be positioned about the refrigerant tube 350 between the compartments 380. The phase change material 200 thus fills each of the compartments 380 for heat exchange therewith. The phase change material heat exchanger 300 promotes heat exchange between the refrigerant 120 and the refrigerant tube 350; between the refrigerant tube 350 and the phase change material 200; between the phase change material 200 and the outer jacket 310; and between the outer jacket 310 and the ambient air. Other components and other configurations may be used herein.

A number of the compartments 380 may have a phase change material 200 therein with differing melting and solidification temperatures. Depending upon the melting point of the phase change material 200, the volume of the phase change material 200 in the liquid state 220 in each compartment 380 may vary. The greater the volume of the phase change material 200 in the liquid state 220, the less of the latent heat of the phase change material is needed to cool the refrigerant tube 350. The greater the volume of the phase change material in the liquid state 220, however, the longer the phase change material may take to solidify. Similarly, the smaller the difference between the ambient air temperature and the melting point of the phase change material, the longer the phase change material may take to solidify.

Fig. 14 shows an alternative embodiment of an outer jacket 430. In this example, the outer jacket 430 may include a number of varying volume compartments 440. Specifically, a first compartment 450, a second compartment 460, and a third compartment 470. As is shown, the second compartment 460 may be larger than the first compartment 450 and the third compartment 470 may be larger than the second compartment 460. Any number of the varying volume compartments 440 may be used herein in any suitable size, shape, or configuration. Other components and other configurations may be used herein.

The first compartment 450 of the varying volume compartments 440 may have the smallest volume so as to facilitate the removal of an amount of heat while still providing the ability to solidify quickly. The second compartment 460 thus may have a slightly larger volume (and hence a larger surface area for heat exchange with the air) so as to facilitate solidification in a timely manner and heat exchange with the air. Finally, the third compartment 470 may have the largest volume so as to provide sufficient heat exchange with the air for heat dissipation and for solidification given the smallest temperature difference with the ambient air. Moreover, the varying volume compartments 440 also may have a phase change material 200 therein with differing melting and solidification temperatures for further increases in efficiency.

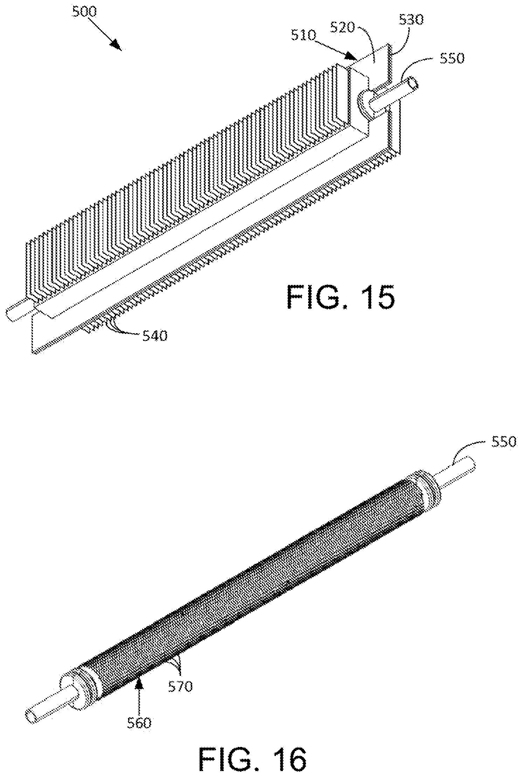

Figs. 15-17 show a further embodiment of a phase change material heat exchanger 500 as may be described herein. In this example, the phase change material heat exchanger 500 may include an outer jacket 510. The outer jacket 510 may include a first half 520 and a second half 530. As is shown in Fig. 15, the halves 520, 530 of the outer jacket 510 may have any number of outer jacket fins 540. The outer jacket fins 540 may extend from the halves 520, 530 into the ambient air. Although a number of vertically extending, horizontally separate fins 540 are shown, other types of fin designs may be used herein. For example, a number of discontinuous or continuous fins may be used. Likewise, horizontally or vertically running fins also may be used herein. Any number of the fins 540 may be used herein in any suitable size, shape, or configuration. Combinations of different type of fins 540 also may be used herein. Further, the fins 540 may extend inside as well as outside the outer jacket 510. The fins 540 provide an increase in surface area and hence an increase in heat transfer between the outer jacket 510 and the ambient air. Other components and other configurations also may be used herein.

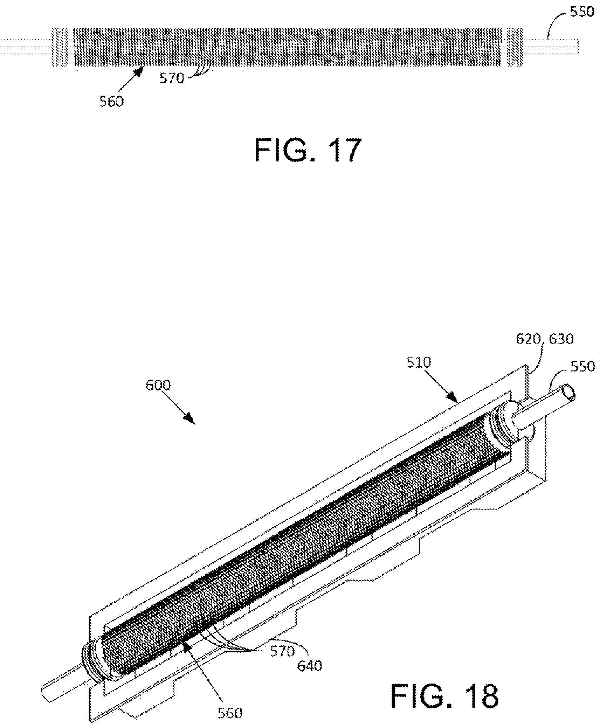

The phase change material heat exchanger 500 also may include one or more refrigerant tubes 550 extending therethrough. The refrigerant tube 550 may be straight or bent or otherwise configured. In this example, the refrigerant tube 550 may include a number of fins 560 thereon. As is shown in Figs. 16 and 17, the fins 560 may be a number of star shaped fins 570. The star shaped fins 570 may be a continuous fin that corkscrews around the refrigerant tube 550. Other types of fin designs may be used herein. For example, a number of discontinuous or continuous fins may be used. Likewise, horizontally or vertically running fins also may be used herein. Any number of the fins 570 may be used herein in any suitable size, shape, or configuration. Combinations of different type of fins 570 also may be used herein. The fins 570 provide an increase in surface area and hence an increase in heat transfer between the refrigerant 120, the refrigerant tube 550, and the phase change material 200. Other components and other configurations may be used herein.

Fig. 18 shows a further embodiment of a phase change material heat exchanger 600 as may be described herein. The phase change material heat exchanger 600 may include an outer jacket 610. The outer jacket 610 may include a first half 620 and a second half 630. In this example, the halves 620, 630 may have a corrugated pattern 640 thereon with a repeating series of raised and lowered portions for an increase in surface area and hence an increase in heat transfer between the phase change material 200 and the ambient air. Other types of surface patterns may be used herein. The outer jacket 610 may have any suitable size, shape, or configuration. The refrigerant tube 550 with the star shaped fins 570 may be positioned within the outer jacket 610 for heat exchange therewith. Other components and other configurations also may be used herein.

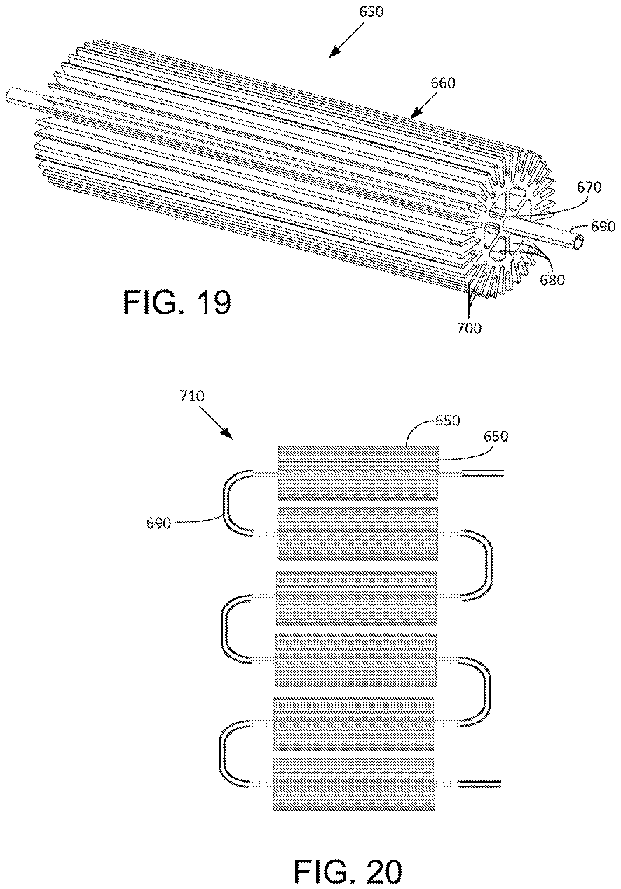

Fig. 19 shows a further embodiment of a phase change material heat exchanger 650 as may be described herein. The phase change material heat exchanger 650 may include an outer jacket 660. The outer jacket 660 may include a central bore 670 and a number of cavities 680. A refrigerant tube 690 may extend through the central bore 670. The cavities 680 may extend along the length of the outer jacket 660 in whole or in part. The phase change material 200 may fill each of the cavities 680. Differing phase change materials may be used in some or all of the cavities 680. An end cap (not shown) and the like may enclose the cavities. The outer jacket 660 and the cavities 680 may have any suitable size, shape, or configuration. The outer jacket 660 may be made in an extrusion process and the like.

The outer jacket 660 may have a number of star shaped fins 700. The star shaped fins 700 may extend radially therefrom. Other types of fin designs may be used herein. For example, a number of discontinuous or continuous fins may be used. Likewise, horizontally or vertically running fins also may be used herein. Any number of the fins 700 may be used herein in any suitable size, shape, or configuration. Combinations of different type of fins 700 also may be used herein. The fins 700 provide an increase in surface area and hence an increase in heat transfer between the phase change material 200 and the ambient air. Other components and other configurations also may be used herein.

Fig. 20 shows a condenser 710 having a number of the phase change material heat exchangers 650. The refrigerant tube 690 may have a number of bends therein so as to connect the phase change material heat exchangers 650. Any number of the phase change material heat exchangers 650 may be used herein. The nature of the phase change material 200 may vary in some or all of the phase change material heat exchangers 650. Other components and other configurations may be used herein.

Although the use of the phase change material heat exchangers has been described mainly in connection with the condenser 170 and the compressor 290, the outer jackets and the phase change material 200 may be used on the "hot" side of the refrigeration system 100 as well as on the "cold" side. In fact, the use of the outer jackets described herein may be useful in preventing or limiting the escape of the refrigerant 120 from the refrigerant tubes, particularly in the context in the use of a hydrocarbon based refrigerant and the like. The outer jacket thus may act as a containment vessel. Moreover, the phase change material heat exchangers provide an overall increase in system efficiency.

It should be apparent that the foregoing relates only to certain embodiments of the present application and the resultant patent. Numerous changes and modifications may be made herein by one of ordinary skill in the art without departing from the general scope of the invention as defined by the following claims and the equivalents thereof.

## Claims

1. A phase change material heat exchanger (160), comprising:
a heat source;
a phase change material (200) surrounding the heat source in whole or in part; and
an outer jacket (180) surrounding the phase change material;
wherein the phase change material removes heat when the heat source is on by melting and releases heat to the ambient when the heat source is off by solidifying, **characterised in that** the outer jacket comprises a plurality of compartments with a plurality of varying volume compartments and/or a plurality of phase change materials therein with differing melting and solidification temperature.

2. A refrigeration system (110) comprising the phase change material heat exchanger of claim 1, wherein the heat source is a refrigerant (20).

3. The refrigeration system of claim 2, further comprising: a compressor (15); and
a condenser (25) downstream of the compressor;
wherein the condenser comprises the phase change material heat exchanger, the heat source is refrigerant in a refrigerant tube (190), the outer jacket surrounds the refrigerant tube, and the phase change material is positioned between the refrigerant tube and the outer jacket and in contact with the refrigerant tube.

4. The refrigeration system of claim 3, wherein the outer jacket comprises a smooth surface.

5. The refrigeration system of claim 3, wherein the outer jacket comprises a corrugated surface.

6. The refrigeration system of claim 3, wherein the outer jacket comprises one or more outer jacket fins (260).

7. The refrigeration system of claim 3, wherein the phase change material comprises a wax.

8. The refrigeration system of claim 3, further comprising a plurality of refrigerant tubes within the outer jacket.

9. The refrigeration system of claim 3, wherein the refrigerant tube comprises one or more refrigerant tube fins, and the one or more refrigerant tube fins (250) preferably comprise one or more star shaped fins.

10. The refrigeration system of claim 3, wherein the refrigerant tube comprises a plurality of bends.

11. The refrigeration system of claim 3, wherein the compressor (15) comprises a phase change material shell thereon, and the phase change material compressor shell preferably comprises the phase change material therein in contact with the compressor.

12. A method of condensing a refrigerant (20) by a condenser comprising a phase change material heat exchanger according to claim 1, comprising:
flowing a refrigerant in a refrigerant tube from a compressor (15), wherein the refrigerant being the heat source;
removing heat from the refrigerant when the compressor is on by melting the phase change material; and
releasing heat to the ambient when the compressor is off by solidifying the phase change material.

## Patentansprüche

1. Phasenwechselmaterial-Wärmetauscher (160), umfassend:
eine Wärmequelle;
ein Phasenwechselmaterial (200), welches die Wärmequelle gänzlich oder teilweise umgibt; und
einen Außenmantel (180), der das Phasenwechselmaterial umgibt;
wobei das Phasenwechselmaterial Wärme durch Schmelzen abzieht, wenn die Wärmequelle eingeschaltet ist, und Wärme durch Erstarren an die Umgebung freisetzt, wenn die Wärmequelle abgeschaltet ist, **dadurch gekennzeichnet, dass** der Außenmantel eine Vielzahl von Abteilen mit einer Vielzahl von Abteilen mit variierendem Volumen und/oder einer Vielzahl von Phasenwechselmaterialien darin umfasst, die unterschiedliche Schmelz- und Erstarrungstemperatur haben.

2. Kühlsystem (110), umfassend den Phasenwechselmaterial-Wärmetauscher nach Anspruch 1, wobei die Wärmequelle ein Kältemittel (20) ist.

3. Kühlsystem nach Anspruch 2, ferner umfassend:
einen Kompressor (15); und
einen Kondensierer (25) nachgeordnet zu dem Kompressor;
wobei der Kondensierer den Phasenwechselmaterial-Wärmetauscher umfasst, die Wärmequelle Kältemittel in einem Kältemittelrohr (190) ist, der Außenmantel das Kältemittelrohr umgibt, und das Phasenwechselmaterial zwischen dem Kältemittelrohr und dem Außenmantel und in Kontakt mit dem Kältemittelrohr positioniert ist.

4. Kühlsystem nach Anspruch 3, wobei der Außenmantel eine glatte Oberfläche umfasst.

5. Kühlsystem nach Anspruch 3, wobei der Außenmantel eine gewellte Oberfläche umfasst.

6. Kühlsystem nach Anspruch 3, wobei der Außenmantel eine oder mehrere Außenmantellamellen (260) umfasst.

7. Kühlsystem nach Anspruch 3, wobei das Phasenwechselmaterial ein Wachs umfasst.

8. Kühlsystem nach Anspruch 3, des Weiteren umfassend eine Vielzahl von Kältemittelrohren innerhalb des Außenmantels.

9. Kühlsystem nach Anspruch 3, wobei das Kältemittelrohr eine oder mehrere Kältemittelrohrlamellen umfasst, und wobei die eine oder mehreren Kältemittelrohrlamellen (250) vorzugsweise eine oder mehrere sternförmige Lamellen umfasst bzw. umfassen.

10. Kühlsystem nach Anspruch 3, wobei das Kältemittelrohr eine Vielzahl von Biegungen umfasst.

11. Kühlsystem nach Anspruch 3, wobei der Kompressor (15) einen Phasenwechselmaterialmantel darauf umfasst, und wobei der Phasenwechselmaterial-Kompressormantel vorzugsweise das Phasenwechselmaterial darin in Kontakt mit dem Kompressor umfasst.

12. Verfahren zum Kondensieren eines Kältemittels (20) durch einen Kondensierer, der einen Phasenwechselmaterial-Wärmetauscher gemäß Anspruch 1 umfasst, umfassend:
Fließenlassen eines Kältemittels in einem Kältemittelrohr aus einem Kompressor (15), wobei das Kältemittel die Wärmequelle ist;
Abziehen von Wärme aus dem Kältemittel, wenn der Kompressor eingeschaltet ist, durch Schmelzen des Phasenwechselmaterials; und
Freisetzen von Wärme an die Umgebung, wenn der Kompressor abgeschaltet ist, durch Erstarren des Phasenwechselmaterials.

## Revendications

1. Échangeur de chaleur à matériau à changement de phase (160), comprenant :
une source de chaleur ;
un matériau à changement de phase (200) entourant la source de chaleur totalement ou en partie ; et
une chemise extérieure (180) entourant le matériau à changement de phase ;
le matériau à changement de phase enlevant de la chaleur lorsque la source de chaleur est en marche en fondant et libérant de la chaleur à l'environnement lorsque la source de chaleur est arrêtée en se solidifiant, **caractérisé en ce que** la chemise extérieure comprend une pluralité de compartiments avec une pluralité de compartiments de volume variable et/ou une pluralité de matériaux à changement de phase à l'intérieur de ceux-ci avec des températures de fusion et de solidification différentes.

2. Système de réfrigération (110) comprenant l'échangeur de chaleur à matériau à changement de phase selon la revendication 1, la source de chaleur étant un fluide frigorigène (20).

3. Système de réfrigération selon la revendication 2, comprenant en outre : un compresseur (15) ; et
un condenseur (25) en aval du compresseur ;
le condenseur comprenant l'échangeur de chaleur à matériau à changement de phase, la source de chaleur étant un fluide frigorigène dans un tube de fluide frigorigène (190), la chemise extérieure entourant le tube de fluide frigorigène, et le matériau à changement de phase étant positionné entre le tube de fluide frigorigène et la chemise extérieure et en contact avec le tube de fluide frigorigène.

4. Système de réfrigération selon la revendication 3, la chemise extérieure comprenant une surface lisse.

5. Système de réfrigération selon la revendication 3, la chemise extérieure comprenant une surface ondulée.

6. Système de réfrigération selon la revendication 3, la chemise extérieure comprenant une ou plusieurs ailettes de chemise extérieure (260).

7. Système de réfrigération selon la revendication 3, le matériau à changement de phase comprenant une cire.

8. Système de réfrigération selon la revendication 3, comprenant en outre une pluralité de tubes de fluide frigorigène à l'intérieur de la chemise extérieure.

9. Système de réfrigération selon la revendication 3, le tube de fluide frigorigène comprenant une ou plusieurs ailettes de tube de fluide frigorigène, et la ou les ailettes de tube de fluide frigorigène (250) comprenant de préférence une ou plusieurs ailettes en forme d'étoile.

10. Système de réfrigération selon la revendication 3, le tube de fluide frigorigène comprenant une pluralité de coudes.

11. Système de réfrigération selon la revendication 3, le compresseur (15) comprenant une enveloppe en matériau à changement de phase sur celui-ci, et l'enveloppe du compresseur en matériau à changement de phase comprenant de préférence le matériau à changement de phase en contact avec le compresseur.

12. Procédé de condensation d'un fluide frigorigène (20) par un condenseur comprenant un échangeur de chaleur à matériau à changement de phase selon la revendication 1, comprenant :
le fait de faire circuler un fluide frigorigène dans un tube de fluide frigorigène à partir d'un compresseur (15), le fluide frigorigène étant la source de chaleur :
l'élimination de la chaleur du fluide frigorigène lorsque le compresseur est en marche en faisant fondre le matériau à changement de phase ; et
la libération de la chaleur vers l'air ambiant lorsque le compresseur est arrêté, en solidifiant le matériau à changement de phase.
